# EUROPÄISCHE PATENTANMELDUNG

(11) **EP 2 157 329 A2**
(43) Veröffentlichungstag der Anmeldung: **24.02.2010**
(21) Anmeldenummer: 09166165.2
(22) Anmeldetag: 23.07.2009
(51) Int. Cl.: F16D 13/64

(54) **Reibbelag**

(30) Priorität: 22.08.2008 DE 102008041455
(71) Anmelder: ZF Friedrichshafen AG, 88038 Friedrichshafen (DE)
(72) Erfinder: Dr. Diemer, Matthias, 97493, Bergrheinfeld (DE); Mackert, Frank, 97421, Schweinfurt (DE); Orlamünder, Andreas, 97453, Schonungen (DE); Peterseim, Michael, 97493, Bergrheinfeld (DE); Radic, Anita, 97422, Schweinfurt (DE)

(57) **Zusammenfassung**

Reibbelag (1), insbesondere für eine Kupplungsscheibe, mit Reibbelagmaterial und mit einem eine geschlossene Kreisringstruktur (17) aufweisenden, in Umfangsrichtung mäanderförmig ausgebildeten Trägerelement (2) mit einer Anzahl sich radial nach innen über die radiale Erstreckung des Reibbelagmaterials hinaus erstreckenden Befestigungsabschnitten zur Anbindung des Reibbelages an eine Kupplungsscheibe (10) oder dergleichen, wobei das Trägerelement (2) zumindest teilweise in das Reibbelagmaterial (3) eingebettet ist, wobei sich von der Kreisringstruktur (17) zumindest über einen Teilbereich elastisch verformbare Fortsätze (5) erstrecken, deren Endabschnitte (18) sich dem Trägerelement (2) oder einem benachbarten Fortsatz (5) insofern annähern, dass sich zwischen diesen und den Endabschnitten ein Spalt (19) bildet.

## Beschreibung

Die Erfindung betrifft einen Reibbelag, insbesondere für eine Kupplungsscheibe, mit Reibbelagmaterial und mit einem eine geschlossene Kreisringstruktur aufweisenden, in Umfangsrichtung mäanderförmig ausgebildeten Trägerelement mit einer Anzahl sich radial nach innen über die radiale Erstreckung des Reibbelagmaterials hinaus erstreckenden Befestigungsabschnitten zur Anbindung des Reibbelages an eine Kupplungsscheibe oder dergleichen, wobei das Trägerelement zumindest teilweise in das Reibbelagmaterial eingebettet ist.
Des Weiteren betrifft die Erfindung eine Reibungskupplung, insbesondere eine Kraftfahrzeugsreibungskupplung.

Bei Reibbelägen dieser Art wird angestrebt, dass sie eine hohe Festigkeit aufweisen, damit sie möglichst außerhalb der Reibfläche mit einem anderen Teil einer Kupplungsscheibe verbunden werden können, wobei insbesondere ein Vernieten in Frage kommt. Zum Erzielen einer hohen Festigkeit ist es bekannt, die Reibflächen mit einem Verstärkungsblech zu verbinden. Gelingt eine gute, möglichst stoffschlüssige Verbindung des Reibmaterials mit dem Verstärkungsblech, weist der entstehende Reibbelag einen hohen Widerstand gegen Biegeverformungen auf, und er kann außerhalb der radialen Erstreckung des Reibmaterials mit einer Belagfeder oder Trägerscheibe einer Kupplungsscheibe verbunden werden. Der Reibbelag kann dann auch bei hinreichendem Verschleißvolumen dünn ausgeführt werden, was sich positiv auf den Bauraum auswirkt. Weiterhin ist die Berstfestigkeit des Reibbelags dann in vorteilhafter Weise hoch.
Aus der DE 10 2007 048 946 A1 ist ein Reibbelag offenbart, der ein Trägerelement, eingebettet in das Reibbelagmaterial und mit zungenförmig ausgebildeten Stegen aufweist. Es hat sich gezeigt, dass bei der Fertigung der Reibbeläge die Handhabung der Trägerelemente schwierig ist. Die einzelnen Trägerelemente verhaken sich ineinander und müssen zeitaufwendig per Hand getrennt werden.

Es ist Aufgabe der Erfindung, einen Reibbelag und ein Trägerelement bereit zu stellen, der eine kostengünstige Fertigung erlaubt und hierbei ist zeitgleich darauf zu achten, dass der Reibbelag eine geringe Neigung zur Verformung beim Aushärten in Folge von Reibbelagmaterialschwund zeigt sowie eine sichere Verbindung zwischen Reibbelagmaterial und Trägerelement sicherstellt und somit der Reibbelag sich zur Verzugsarmut und eine hohe Berstfestigkeit auszeichnet.

Diese Aufgabe wird erfindungsgemäß gelöst dadurch, dass sich von der Kreisringstruktur zumindest über einen Teilbereich elastisch verformbare Fortsätze erstrecken, deren Endabschnitte sich dem Trägerelement oder einem benachbarten Fortsatz insofern annähern, dass sich zwischen diesen und den Endabschnitten ein Spalt bildet. Als besonders vorteilhaft hat sich eine Spaltbreite von 0,9mm bis hin zu 0mm ???, also eine Spaltbreite bei der der Endabschnitt an dem benachbarten Fortsatz oder dem Trägerelement anliegt, herausgestellt. Zwischen dem besagten Endabschnitt und dem benachbarten Trägerelement/Fortsatz ist eine Trennfuge ausgebildet. Vorteilhaft wird hierdurch erreicht, dass die erfindungsgemäßen Trägerelemente eine geringe Neigung aufweisen, mit den daran ausgebildeten Fortsätzen sich ineinander zu verhaken. Hierbei wird durch die besondere Ausbildung der Fortsätze eine sichere Verbindung mit dem Reibbelagmaterial bei gleichzeitig geringer Verzugsneigung und eine hohe Berstfestigkeit des Reibbelages erzielt.

Eine weitere erfindungsgemäße Lösung wird dadurch erreicht, dass sich von der Kreisringstruktur zumindest über einen Teilbereich elastisch verformbare Fortsätze mit ihrem Anfangs- und Endbereich heraus erstrecken. Bei dieser Lösung sind die Fortsätze derart ausgebildet, dass diese zwischen deren Anfangs- und Endbereich elastisch verformbar sind, insbesondere zur Aufnahme von Volumen- oder Größenänderung des Reibbelagmaterials bei der Aushärtung im Herstellungsprozess. Indem sich die Fortsätze sowohl mit ihrem Anfangs- als auch Endbereich aus der Kreisringstruktur des Trägerelementes heraus erstrecken, bilden diese einen geschlossene Konturverlauf, der eine geringe Neigung zum Verhaken der Trägerelemente ineinander aufweist. Hierbei wird durch die besondere Ausbildung der Fortsätze eine sichere Verbindung mit dem Reibbelagmaterial bei gleichzeitig geringer Verzugsneigung und eine hohe Berstfestigkeit des Reibbelages erzielt.

Eine dritte erfindungsgemäße Lösung wird dadurch erreicht, dass sich von der Kreisringstruktur zumindest über einen Teilbereich elastisch verformbare Fortsätze erstrecken und zumindest ein Fortsatz zumindest einen Endabschnitt aufweist, der mittels einem eine Sollbruchstelle bildenden Übergangsbereich in einen benachbarten Fortsatz oder in die Kreisringstruktur übergeht. Die Sollbruchstellen sollen derart ausgebildet sein, dass sie beim Schrumpfen des Reibbelagmaterials beim Aushärten des Reibbelages reißen können. Die Sollbruchstelle soll derart ausgebildet sein, dass diese insbesondere bei Auftreten von Zugspannungen bricht. Dies kann zum Beispiel durch Einfügen einer Trennfuge, die den besagten Endabschnitt vom benachbarten Trägerelement teilweise, also noch nicht vollständig trennt, erreicht werden. Auch ist es vorteilhaft ausführbar, dass die Sollbruchstellen durch eingebrachte Schneiden oder Stempel in der Herstellungsform des Reibbelages, in die das Trägerelement eingelegt wird, durchbrochen werden. Vorteilhaft wird hierdurch erreicht, dass die erfindungsgemäßen Trägerelemente eine geringe Neigung aufweisen, mit den daran ausgebildeten Fortsätzen sich ineinander zu verhaken. Hierbei wird durch die besondere Ausbildung der Fortsätze eine sichere Verbindung mit dem Reibbelagmaterial bei gleichzeitig geringer Verzugsneigung und eine hohe Berstfestigkeit des Reibbelages erzielt.

Eine weitere vorteilhafte Ausgestaltung ergibt sich, indem das Trägerelement nur teilweise in das Belagmaterial eingebettet ist. Hierdurch ergibt sich eine bessere Anlage der Reibbelagrückseite an die zugehörige Belagfederung.

In weiterer erfindungsgemäßer Ausgestaltung kann vorgesehen sein, dass der Spalt kleiner oder gleich 0,9mm ist. In erfindungsgemäßer Weiterbildung wird vorgeschlagen, dass der Spalt kleiner oder gleich 0,5mm ist. Alternativ wird vorgeschlagen, dass der Spalt kleiner oder gleich der Dicke des Trägerelements ist.

Hierdurch ergibt sich eine bessere Handhabung bei der Herstellung, da die Trägerelemente nicht verhaken.

In Weiterbildung der Erfindung wird vorgesehen, dass bei einer Größenänderung des Reibbelagmaterials die Fortsätze verformt werden können. Alternativ ist es auch möglich, dass bei einer Volumenänderung des Reibbelages im Herstellungsprozess die Fortsätze verformbar sind. Eine auch vorteilhafte Ausgestaltung ergibt sich, indem sich die Fortsätze elastisch verformen. Hierbei zeigt sich, dass die Volumenänderung beim Aushärten abgefangen werden kann. Bei einer Änderung des Durchmessers des ringartig ausgebildeten Reibbelages, zum Beispiel durch Wärmeausdehnung oder durch Schrumpfen infolge Volumenschwunds, zum Beispiel beim Aushärten der Reibbelagsrohmasse, können sich die Fortsätze vorteilhaft elastisch verformen und so eine Größenänderung des Reibbelages ohne Auftreten von nennenswerten Spannungen zwischen Trägerelement und dem damit in Verbindung stehenden Reibbelagmaterial ausgleichen.

In weiterer erfindungsgemäßer Weiterbildung wird vorgesehen, dass der Reibbelag eine im Wesentlichen kreisringartige Grundform aufweist. Hierdurch ergeben sich eine höhere Berstfestigkeit und das Aufweisen von viel Reibbelagvolumen.

In weiterer Ausgestaltung ergibt sich, dass die Kreisringstruktur des Trägerelements vornehmlich im Bereich der neutralen Zone des Reibbelagmaterials eingebettet ist. Die neutrale Zone definiert sich wie folgt: Beim Herstellen des Reibbelages wird das Reibbelagmaterial, welches in der Regel eine zähflüssige Masse ist bzw. aus einer zähflüssigen Masse vorgefertigt wurde, in eine der Endform des Reibbelages entsprechenden Pressform eingebracht und härtet hierin aus. Hierbei wird in der Regel Hitze mit eingebracht. Bei der Aushärtung findet eine Volumenänderung des Reibbelagmaterials statt. Das Reibbelagmaterial schwindet. Der Außendurchmesser des ringförmigen Reibbelagmaterials wird hierbei kleiner, der Innendurchmesser wird größer. Im Reibbelag selbst befindet sich zwischen Außen- und Innendurchmesser ein Bereich, innerhalb dessen die Volumenänderung gering bis nahezu null ausfällt. Dies wird die neutrale Zone genannt und befindet sich in der Regel im Bereich von 15% bis 70% der radialen Erstreckung des Reibbelages. Indem die Kreisringstruktur des Trägerelementes im Wesentlichen im Bereich der vorgenannten neutralen Zone in den Reibbelag eingebracht wird, insbesondere mit den Bereichen des Trägerelementes, die durch ihre Form nur eine gewisse Verformbarkeit in Umfangs- und radialer Richtung aufweisen, wird ein Verziehen bzw. eine durch die Volumenänderung hervorgerufene Abweichung von der Sollform des Reibbelages vermieden bzw. minimiert. Der Reibbelag bildet keine tellerfederartige Form aus.

Eine weiter vorteilhafte Ausgestaltung zeigt sich dadurch, dass sich die Befestigungsabschnitte über das Reibbelagmaterial hinaus radial nach innen erstrecken. Alternativ kann die Anbindung der Befestigungsabschnitte an eine Kupplungsscheibe radial innerhalb des Reibbelagmaterials erfolgen. Hierdurch ergeben sich das Vorhandensein einer größeren Reibfläche, sowie ein geringerer axialer Bauraumbedarf.

In Weiterbildung der Erfindung wird vorgeschlagen, dass ein Befestigungsabschnitt zwei Ringabschnittteile miteinander verbindet. Weiterhin wird vorgeschlagen, dass die Kreisringstruktur des Trägerelementes vermittels Befestigungsabschnitte mäanderförmig ausgebildet wird. Im Bereich des Überganges von der Kreisringstruktur in den Befestigungsabschnitt kann durch den mäanderförmigen Verlauf der Form des Trägerelementes eine Elastizität des Trägerelementes in Umfangsrichtung erzielt werden.

Eine weitere erfinderische Ausgestaltung zeigt sich, indem die Anbindung durch Vernietung erfolgt. Hierdurch wird eine Kostensenkung bei der Herstellung erreicht.

In weiterer Ausgestaltung ergibt sich, dass das Trägerelement aus Stahl, insbesondere Federstahl, hergestellt wird. Daraus folgert sich eine hohe Festigkeit des Trägerelementes, was wiederum eine hohe Berstfestigkeit des Reibbelages verspricht.

In erfindungsgemäßer Weiterbildung zeigt sich, dass das Trägerelement aus Blech, insbesondere Federstahlblech, erstellt wird. Hierdurch ergibt sich eine hohe Formstabilität, weil das Trägerelement nicht zum Verbiegen neigt.

Eine weitere vorteilhafte Ausgestaltung ergibt sich daraus, dass das Trägerelement mit einer die Haftung mit dem Reibbelagmaterial erhöhenden Beschichtung versehen ist. Dadurch erhöht sich die Berstfestigkeit.

In Weiterbildung der Erfindung ergibt sich, dass das Reibmaterial als durchgängiger Ring ausgebildet ist. Hierdurch erreicht man eine hohe Formstabilität, sowie eine geringe Verzugsneigung.

Eine weitere Ausgestaltung der Erfindung zeigt sich dadurch, dass in die Oberfläche des Reibmaterials Nuten oder Einschnitte eingebracht sind. Hierdurch ergibt sich ein verbessertes Einkuppelverhalten.

In weiterer erfindungsgemäßer Ausgestaltung ist vorgesehen, dass sich die Fortsätze von den Ringabschnittsteilen radial nach außen erstrecken. In erfindungsgemäßer Weiterbildung ergibt sich, dass die Befestigungsabschnitte als Ösen für den Durchtritt eines Niets ausgebildet sind. Hierdurch wird eine sichere Verbindung zwischen Trägerelement und Reibbelagmaterial erreicht.

In Weiterbildung der Erfindung zeigt sich, dass die Ringabschnittsteile, die Fortsätze und die Befestigungsabschnitte einteilig ausgebildet sind, wodurch sich geringe Herstellungskosten ergeben.

Eine abschließende Ausgestaltung der Erfindung zeigt sich darin, dass das Ringabschnittsteil, die Fortsätze und die Befestigungsabschnitte aus einem Blech ausgestanzt sind Alternativ kann das Blech eben ausgebildet sein. Hierdurch wird eine Preissenkung erreicht.

Weitere erfindungsgemäße Ausgestaltungen und Merkmale sind in den nachfolgenden Figurenbeschreibungen offenbart. Sie zeigen:
Fig. 1 den Radialschnitt durch eine Kraftfahrzeugkupplungseinrichtung,
Fig. 2 die Seitenansicht eines Reibbelags mit dargestelltem Trägerelement und nur angedeutetem Reibmaterial gemäß einer ersten Ausführungsform der Erfindung,
Fig. 3 eine zweite Ausführungsform der Erfindung in der Darstellung gemäß Fig. 2,
Fig. 4 eine dritte Ausführungsform der Erfindung in der Darstellung gemäß Fig. 2,
Fig. 5 eine vierte Ausführungsform der Erfindung in der Darstellung gemäß Fig. 2 und
Fig. 6 eine fünfte Ausführungsform der Erfindung in der Darstellung gemäß Fig. 2.

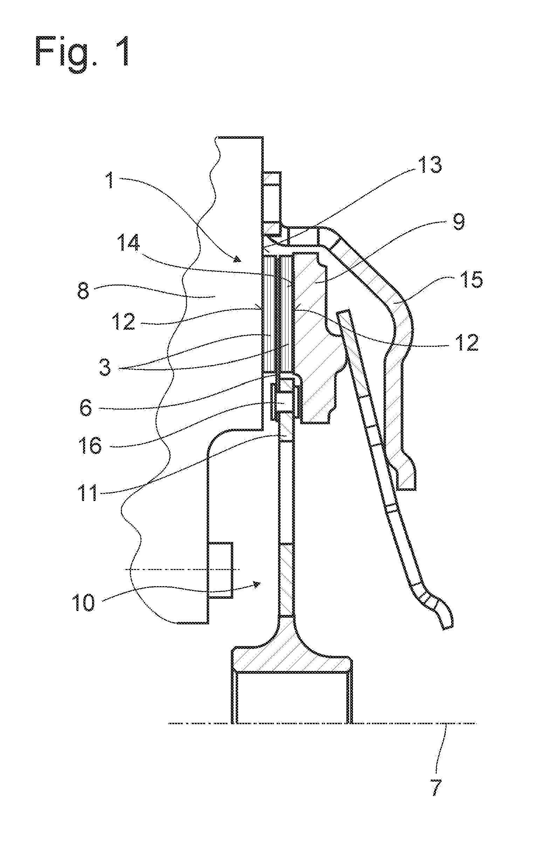

In Fig. 1 ist eine Kraftfahrzeug-Reibungskupplung im Radialschnitt zu sehen, die in bekannter Weise aufgebaut ist. Eine auf eine Getriebeeingangswelle drehfest aufgesetzte Kupplungsscheibe 10 ist zwischen einem Schwungrad 8 und einer Anpressplatte 9 angeordnet, wobei durch Aufbringung einer axialen Andruckkraft die Anpressplatte 9 einen Reibschluss zwischen sich, der Kupplungsscheibe 10 und dem Schwungrad 8 herstellt. Die Bauteile drehen um eine Drehachse 7; sie sind durch ein Kupplungsgehäuse 15 am Schwungrad 8 befestigt.

Die Kupplungsscheibe 10 weist eine Trägerscheibe 11 auf, an deren radial äußeren Bereich ein Reibbelag 1 mittels einer Nietverbindung 16 fixiert ist. Bei der Aufbringung einer Axialkraft liegt die Reibfläche 13 des Schwungrads 8 und die Reibfläche 14 der Anpressplatte 9 an den Reibflächen 12 des Reibbelags 1 auf.

Die Kupplungsscheibe 10 weist zwei Reibbeläge 1 auf, deren Reibflächen 12 voneinander abgewandt sind. Zwischen den beiden Reibbelägen 1 ist eine sogenannte Belagfederung zur Verbesserung des Einkuppelverhaltens eingebracht. Der Reibbelag 1 selbst setzt sich vorliegend zusammen aus Reibbelagmaterial 3 und einem Trägerelement 2, das zumindest teilweise in das Reibbelagmaterial 3, insbesondere auf der der Reibfläche 12 abgewandten Seite des Reibbelages 1, eingebettet ist. Mit der Reibbelagrückseite, der Reibfläche 12 abgewandten Seite, stützt sich im eingekuppelten Zustand der Reibungskupplung der Reibbelag 1 an der Belagfederung ab. Es liegen somit das Trägerelement 2 als auch das Reibbelagmaterial 3 zumindest teilweise an der Belagfederung an. Das Trägerelement 2 bildet mit der Reibbelagrückseite erfindungsgemäß im Wesentlichen im Bereich der Fertigungsgenauigkeit eine Ebene. Das Trägerelement 2 ist erfindungsgemäß entsprechend seiner Blechstärke, axialen Ausdehnung von der Reibbelagrückseite in des Reibbelagmaterial 3 eingebracht. Hierbei bilden die Reibbelagrückseite und die entsprechende Fläche des Trägerelementes 2 im Wesentlichen eine gemeinsame Ebene. An seinem radial innenliegenden Bereich ist der Reibbelag 1 mit Befestigungsabschnitten 6 versehen, die nach Art einer Öse ausgebildet sind, so dass jeweils der Nietschaft einer Nietverbindung 16 durch das aus Stahlblech bestehende Trägerelement 2 hindurch treten kann, wodurch der Reibbelag 1 an der Trägerscheibe 11 der Kupplungsscheibe 10 befestigt wird.

Eine alternative Anbindungsart ergibt sich hier als Ersatz zum Nieten, wenn die Befestigungsabschnitte 6 des Trägerelementes 2 an der Trägerscheibe 11 oder an einem Belagfederblech, welches zwischen zweien Reibbelägen 1 zur elastischen Abstützung beim Einkuppeln, beziehungsweise zur Stützung und Halterung der Reibbeläge 1 vorgesehen ist, durch Löten oder Schweißen, insbesondere Widerstandsschweißen, befestigt werden.

Hierbei kann vorteilhaft der Befestigungsabschnitt 6 ohne der als Öse ausgebildeten Bohrung zum Durchtritt eines Nietes ausgebildet werden. Der Befestigungsabschnitt 6 kann, vorteilhaft in diesem Fall, als zungenartiger Befestigungsabschnitt, also in Ausbildung einer Lasche oder eines vorspringenden Blechstreifens ausgebildet werden.

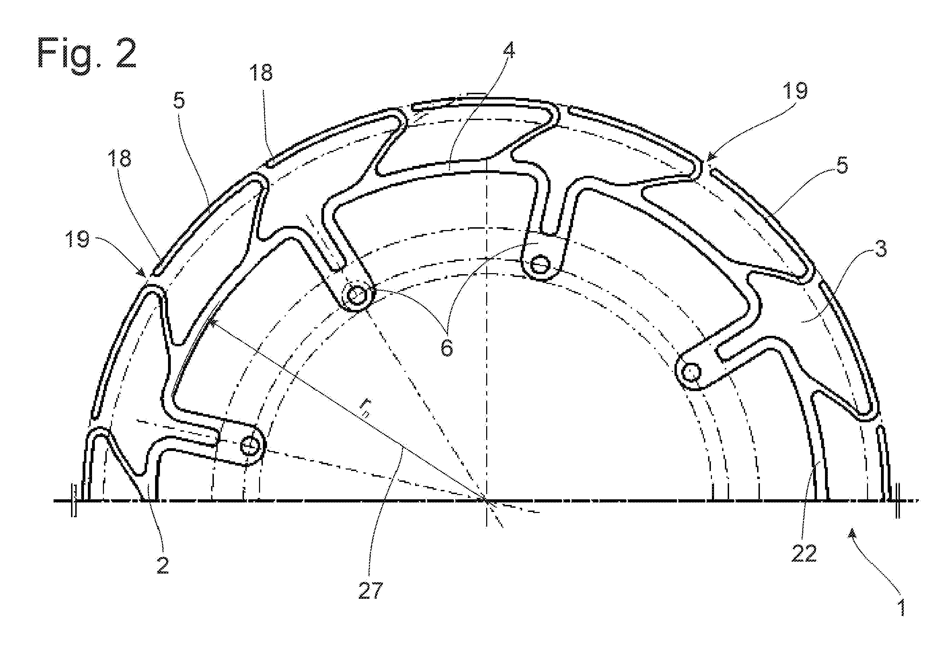

Wie aus Fig. 2 zu sehen ist, besteht das Trägerelement 2 aus einem Ringteil 22, das mehrere Ringabschnittteile 4 aufweist und sich vorliegend um den gesamten Umfang des Reibbelages 1 herum erstreckt.
Wie Fig. 2 entnommen werden kann, liegen streng genommen eine Anzahl an Ringabschnittteilen 4 vor, die jeweils über einen Befestigungsabschnitt 6 miteinander verbunden werden. Insgesamt ergibt sich jedenfalls funktionell durch die Einheit von Ringabschnittsteilen 4 und Befestigungsabschnitten 6 eine um den gesamten Umfang umlaufende mäanderförmige Kreisringstruktur 17. Von dieser erstrecken sich radial nach außen Fortsätze 5, die vorliegend bumerang-förmig gestaltet sind. Sie erstrecken sich im vorliegenden Falle bis zum radial äußeren Rand des Reibbelages 1.

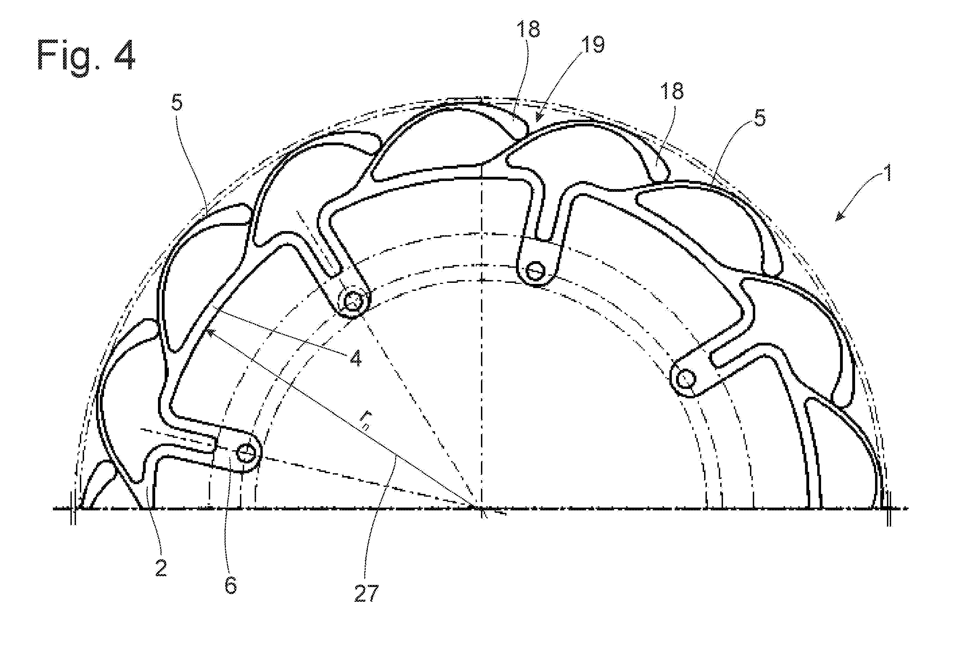

Die sich vom Trägerelement 2 zumindest über einen Teilbereich elastisch verformbaren und bumerang-förmig ausgebildeten Fortsätze 5, d.h. diese erstrecken sich in radialer Richtung nach außen, bevor sie in Umfangsrichtung verlaufen, nähern sich mit deren Endabschnitten 18 dem Trägerelement 2 oder einem benachbarten Fortsatz 5 insofern an, dass sich zwischen diesen und den Endabschnitten 18 ein Spalt 19 bildet, wie in den Ausführungen zu Fig. 4 näher ausgeführt. Vorteilhaft wird hierdurch erreicht, dass die erfindungsgemäßen Trägerelemente 2 eine geringe Neigung aufweisen, mit den daran ausgebildeten Fortsätzen 5 sich ineinander zu verhaken. Hierbei wird durch die besondere Ausbildung der Fortsätze 5 eine sichere Verbindung mit dem Reibbelagmaterial 3 bei gleichzeitig geringer Verzugsneigung und eine hohe Berstfestigkeit des Reibbelages 1 erzielt.

Die radiale Mitte des Ringteils 22 bzw. der Ringabschnittteile 4 liegt bevorzugt auf dem neutralen Radius r_{N} 27, weil sich das Ringteil 22 dadurch in der bereits vorher erläuterten neutralen Zone befindet und hierdurch ein Verziehen bzw. eine durch die Volumenänderung hervorgerufene Abweichung von der Sollform des Reibbelages vermieden bzw. minimiert werden kann.

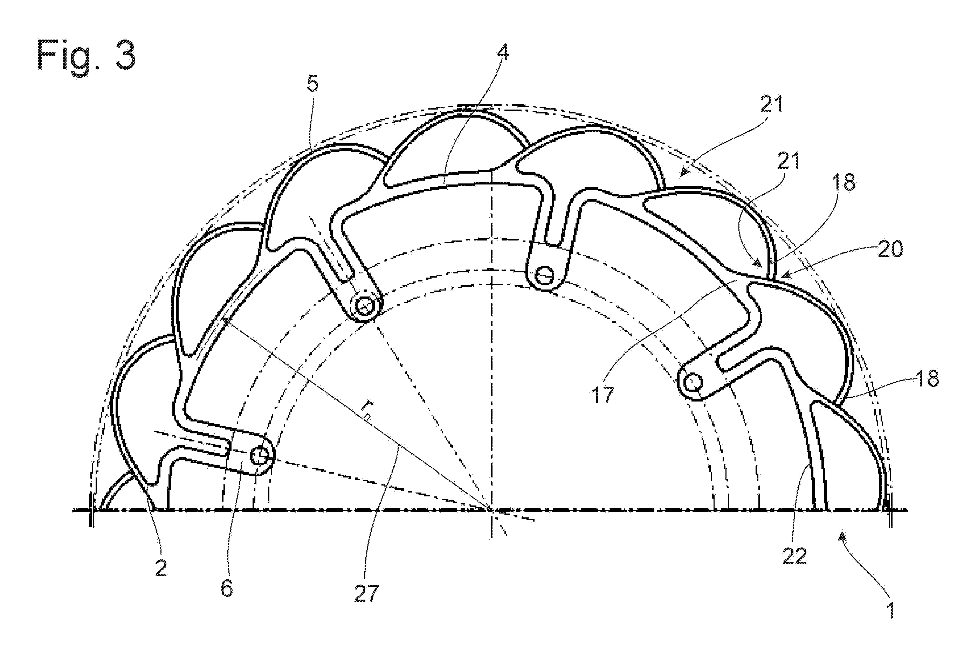

Eine alternative Ausgestaltung des Reibbelags 1 ist in Fig. 3 zu sehen. Hier sind im Verhältnis zu Fig. 2 keine bumerang-förmig ausgebildeten Fortsätze 5 vorgesehen, sondern zumindest über einen Teilbereich elastische Fortsätze 5, die etwa viertelkreisförmig gestaltet sind, wobei zumindest ein Fortsatz 5 zumindest einen Endabschnitt 18 aufweist, der mittels einem eine Sollbruchstelle 20 bildenden Übergangsbereich 21 in einen benachbarten Fortsatz 5 oder in die Kreisringstruktur 17, also dem Ringteil 22, übergeht. Die Sollbruchstellen 20 sollen derart ausgebildet sein, dass sie beim Schrumpfen des Reibbelagmaterials 3 beim Aushärten des Reibbelages 1 reißen können. Die Sollbruchstelle 20 soll derart ausgebildet sein, dass diese insbesondere bei Auftreten von Zugspannungen bricht. Dies kann zum Beispiel durch Einfügen einer Trennfuge, die den besagten Endabschnitt 18 vom benachbarten Trägerelement 2 teilweise, also noch nicht vollständig, trennt, erreicht werden. Auch ist es vorteilhaft ausführbar, dass die Sollbruchstellen 20 durch eingebrachte Schneiden oder Stempel in der Herstellungsform des Reibbelages 1, in die das Trägerelement 2 bei der Reibbelagherstellung eingelegt wird, durchbrochen werden. Es sei hier noch erwähnt, dass die unter der in Fig. 3 dargelegten Ausführungen auch ihre entsprechende Anwendungen in den übrigen Ausführungsbeispielen dieser Anmeldung Anwendung finden können. Insbesondere auch das Vorsehen von Schneiden oder Stempeln zum Durchtrennen bzw. Aufweiten des Spaltes oder der Trennfuge an den besagten Fortsätzen in der Herstellungsform, in die das Trägerelement mit der Reibbelagrohmasse zur Erstellung des erfindungsgemäßen Reibbelages eingebracht wird. Vorteilhaft wird hierdurch erreicht, dass die erfindungsgemäßen Trägerelemente 2 eine geringe Neigung aufweisen, mit den daran ausgebildeten Fortsätzen 5 sich ineinander zu verhaken. Hierbei wird durch die besondere Ausbildung der Fortsätze 5 eine sichere Verbindung mit dem Reibbelagmaterial 3 bei gleichzeitig geringer Verzugsneigung und eine hohe Berstfestigkeit des Reibbelages 1 erzielt. Ansonsten gelten die analogen Ausführungen zu Fig. 2.

Bei der Ausgestaltung nach Fig. 4 sind die Fortsätze 5 weder derartig bumerangförmig wie in Fig. 2 noch derartig viertelkreisförmig beziehungsweise bogenförmig wie in Fig. 3 ausgebildet, sondern die zumindest über einen Teilbereich elastischen Fortsätze 5 sind in ihren Endabschnitten 18 zungenförmig, also sich verbreiternd ausgebildet und nähern sich mit ihren Endabschnitten 18 dem Trägerelement 2 oder einem benachbarten Fortsatz 5 insofern an, dass sich zwischen diesen und den Endabschnitten 18 ein Spalt 19 bildet. Als besonders vorteilhaft hat sich eine Spaltbreite von 0,9mm bis hin zu 0mm, herausgestellt. Zwischen dem besagten Endabschnitt 18 und dem benachbarten Trägerelement 2 beziehungsweise Fortsatz 5 ist eine die besagte Spaltbreite aufweisende Trennfuge ausgebildet. Bei einer Spaltbreite von 0mm liegt der Endabschnitt 18 an dem benachbarten Fortsatz 5 beziehungsweise dem Trägerelement 2 an, es ist aber eine durchgängig ausgebildete Trennfuge zwischen Endabschnitt 18 und dem benachbarten Fortsatz 5 beziehungsweise Trägerelement 2 vorhanden. Vorteilhaft wird hierdurch erreicht, dass die erfindungsgemäßen Trägerelemente 2 eine geringe Neigung aufweisen, mit den daran ausgebildeten Fortsätzen 5 sich ineinander zu verhaken. Ebenso wird durch die besondere Ausbildung der Fortsätze 5 eine sichere Verbindung mit dem Reibbelagmaterial 3 bei gleichzeitig geringer Verzugsneigung und eine hohe Berstfestigkeit des Reibbelages 1 erzielt. Ansonsten gelten die analogen Ausführungen wie bei Fig. 2.

Besonders vorteilhaft ist die Erfindung, wenn die Spaltbreite auf die Dicke, also die Blechstärke des Trägerelementes 3 abgestimmt ist. Als vorteilhaft erweist sich hierbei, wenn die Spaltbreite gleich oder kleiner der Dicke, also der Blechstärke des Trägerelementes 2 ist.

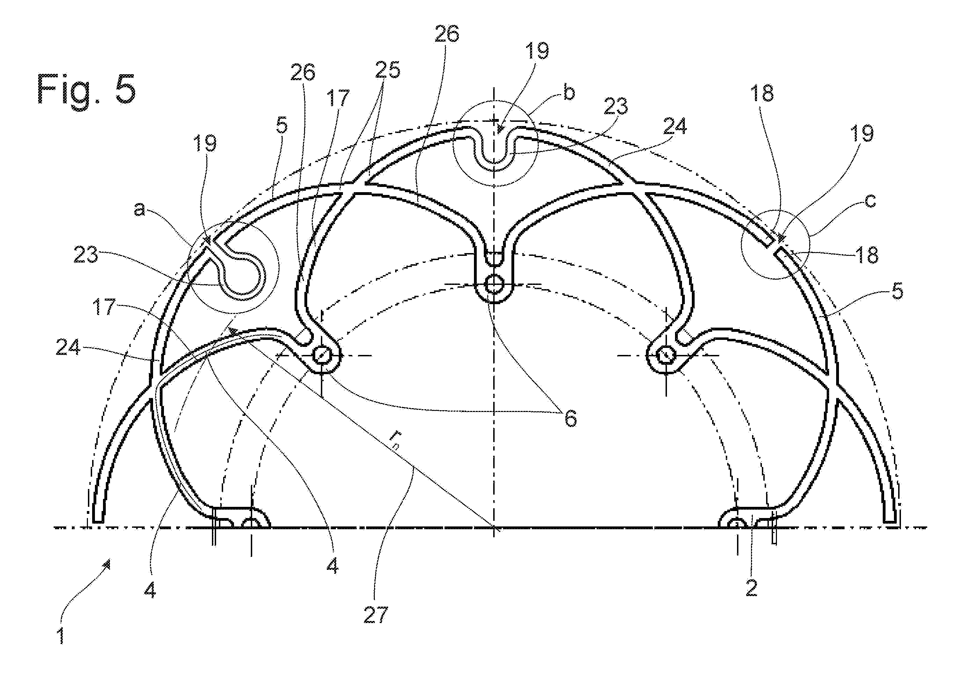

Eine weitere erfinderische Ausgestaltungsvariante des Reibbelags 1 ist in Fig. 5 zu sehen. Im Verhältnis zu den Fig. 2-4 liegen die Ringabschnittteile 4 nicht radial verschoben in den gesamten Umfang des Reibbelags 1 erstreckt vor, sondern bewegen sich halbkreisförmig beziehungsweise bogenförmig von den Befestigungsabschnitten 6 weg, wobei dennoch durch die Einheit zwischen Ringabschnittteil 4 und Befestigungsabschnitt 6 eine mäanderförmige Kreisringstruktur 17 ausgebildet wird. Die halbkreisförmigen Ringabschnittteile 4 bzw. deren beiden viertelkreisförmigen Ringabschnittteilhälften 26 beziehungsweise Bogenabschnittteilhälften 26 schneiden sich am äußeren Ende der neutralen Zone und bilden an dieser Stelle Fortsätze 5 aus, die sich nach radial außen gerichtet in Verlängerung der Ringabschnittteilhälften 26 erstrecken.
In Fig. 5 sind nun drei alternative erfinderische Ausgestaltungen exemplarisch an einem Reibbelag 1 dargestellt. Die erste Erfindungsvariante (a) sieht vor, die beiden benachbarten Fortsätze 5 durch ein besonders elastisch ausgebildetes o-förmiges Verbindungsstück 23 auszugestalten, was dadurch erreicht wird, dass das radial sich nach innen erstreckende o-förmige Verbindungsstück 23 besonders kreisförmig und dadurch elastisch gestaltet wird. Bei dieser Lösung sind die Fortsätze 5 derart ausgebildet, dass diese zwischen deren Anfangsbereich 24 und Endbereich 25 elastisch verformbar sind, insbesondere zur Aufnahme von Volumen- oder Größenänderung des Reibbelagmaterials 3 bei der Aushärtung im Herstellungsprozess. Indem sich die Fortsätze 5 sowohl mit ihrem Anfangs 24 als auch Endbereich 25 aus der Kreisringstruktur 17 des Trägerelementes 2 heraus erstrecken, bilden diese einen geschlossene Konturverlauf, der eine geringe Neigung zum Verhaken der Trägerelemente 2 ineinander aufweist. Hierbei wird durch die besondere Ausbildung der Fortsätze 5 eine sichere Verbindung mit dem Reibbelagmaterial 3 bei gleichzeitig geringer Verzugsneigung und eine hohe Berstfestigkeit des Reibbelages 1 erzielt. Anzumerken ist hierbei, dass der verbleibende Spalt 19 zwischen den benachbarten Fortsätzen 5 wie in Fig. 2 ausgeführt wird und somit die bereits erwähnten erfinderischen Vorteile untermauert.
Die zweite Ausgestaltungsvariante (b) sieht vor, die beiden benachbarten Fortsätze 5 durch ein elastisch ausgebildetes u-förmiges Verbindungsstück 23 auszugestalten. Auch bei dieser Lösung sind die Fortsätze 5 derart ausgebildet, dass diese zwischen deren Anfangsbereich 24 und Endbereich 25 elastisch verformbar sind, insbesondere zur Aufnahme von Volumen- oder Größenänderung des Reibbelagmaterials 3 bei der Aushärtung im Herstellungsprozess. Indem sich die Fortsätze 5 sowohl mit ihrem Anfangs 24- als auch Endbereich 25 aus der Kreisringstruktur 17 des Trägerelementes 2 heraus erstrecken, bilden diese einen geschlossene Konturverlauf, der eine geringe Neigung zum Verhaken der Trägerelemente 2 ineinander aufweist. Hierbei wird durch die besondere Ausbildung der Fortsätze 5 eine sichere Verbindung mit dem Reibbelagmaterial 3 bei gleichzeitig geringer Verzugsneigung und eine hohe Berstfestigkeit des Reibbelages 1 erzielt. Im Gegensatz zur Erfindungsvariante (a) ist der sich zwischen den benachbarten Fortsätzen 5 befindende Spalt 19 deutlich ausgebildet, wodurch aber keine Einschränkung des erfinderischen Gedanken erwirkt wird, weil durch das u-förmige Verbindungsstück 23 ein Verhaken als unwahrscheinlich erscheint.
Die letzte Erfindungsvariante (c) spiegelt die bereits an Fig. 2 veranschaulichte Spaltbildung wieder, die auch an dieser alternativen Ausgestaltung des Reibbelags 1 verwirklicht werden kann. Die sich vom Trägerelement 2 zumindest über einen Teilbereich elastisch verformbaren und etwa viertelkreisförmig, beziehungsweise bogenförmig ausgebildeten Fortsätze 5, d.h. diese erstrecken sich in radialer Richtung nach außen, nähern sich mit deren Endabschnitten 18 dem Trägerelement 2 oder einem benachbarten Fortsatz 5 insofern an, dass sich zwischen diesen und den Endabschnitten 18 ein Spalt 19 bildet. Dieser wird besonders vorteilhaft wie in Ausführungsbeispiel zur Fig. 2 erwähnt ausgebildet. Vorteilhaft wird hierdurch erreicht, dass die erfindungsgemäßen Trägerelemente 2 eine geringe Neigung aufweisen, mit den daran ausgebildeten Fortsätzen 5 sich ineinander zu verhaken. Hierbei wird durch die besondere Ausbildung der Fortsätze 5 eine sichere Verbindung mit dem Reibbelagmaterial 3 bei gleichzeitig geringer Verzugsneigung und eine hohe Berstfestigkeit des Reibbelages 1 erzielt.

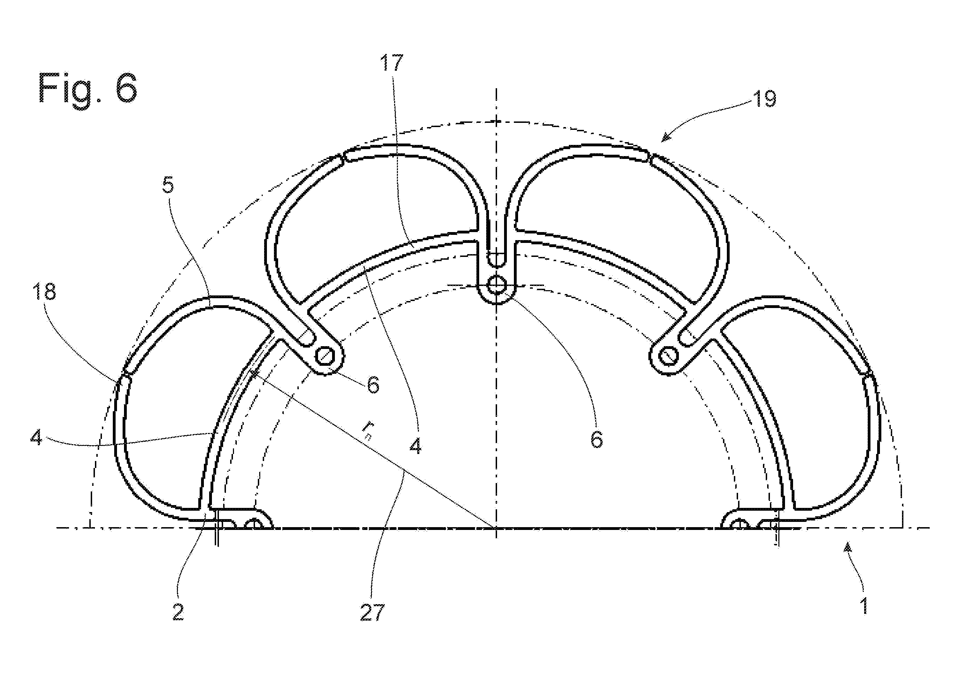

Bei der letztgenannten erfinderischen Ausgestaltung eines Reibbelags 1 ist in Fig. 6 eine den Fig. 2-4 ähnliche Variante zu sehen, wobei die Ringabschnittteile 4 in den inneren Grenzbereich der neutralen Zone radial versetzt sind, aber dennoch in Verbindung mit den Befestigungsabschnitten 6 eine mäanderartige Kreisringstruktur 17 aufweisen. Die sich vom Trägerelement 2 zumindest über einen Teilbereich elastisch verformbaren und etwa viertelkreisförmig ausgebildeten Fortsätze 5, d.h. diese erstrecken sich in radialer Richtung nach außen, nähern sich mit deren Endabschnitten 18 dem Trägerelement 2 oder einem benachbarten Fortsatz 5 insofern an, dass sich zwischen diesen und den Endabschnitten 18 ein Spalt 19 bildet. Vorteilhaft wird hierdurch erreicht, dass die erfindungsgemäßen Trägerelemente 2 eine geringe Neigung aufweisen, mit den daran ausgebildeten Fortsätzen 5 sich ineinander zu verhaken. Hierbei wird durch die besondere Ausbildung der Fortsätze 5 eine sichere Verbindung mit dem Reibbelagmaterial 3 bei gleichzeitig geringer Verzugsneigung und eine hohe Berstfestigkeit des Reibbelages 1 erzielt. Anzumerken bleibt hierbei, dass sich die Fortsätze 5 in direkter Verlängerung der Befestigungsabschnitte 6 ausbilden und sich dadurch vom äußeren Ende des Ringabschnittteils 4 erstrecken. Anders als in den Fig. 2-5 nähern sich die beiden Fortsätze 5 eines Ringabschnittteils 4 gegenseitig an. Im Ausführungsbeispiel der Fig. 6 sind die beiden Schenkel des Befestigungsabschnitts 6, die sich zum Ringabschnittteil 4 erstrecken, nur teilweise von Reibbelagmaterial 3 überdeckt. Hierdurch werden die Befestigungsabschnitte 6 besonders elastisch ausgeführt.

### Bezugszeichenliste

- 1: Reibbelag
- 2: Trägerelement
- 3: Reibbelagmaterial
- 4: Ringabschnittteil
- 5: Fortsatz
- 6: Befestigungsabschnitt
- 7: Drehachse
- 8: Schwungrad
- 9: Anpressplatte
- 10: Kupplungsscheibe
- 11: Trägerscheibe
- 12: Reibfläche des Reibbelags
- 13: Reibfläche des Schwungrads
- 14: Reibfläche der Anpressplatte
- 15: Kupplungsgehäuse
- 16: Nietverbindung
- 17: Kreisringstruktur
- 18: Endabschnitte
- 19: Spalt
- 20: Sollbruchstelle
- 21: Übergangsbereich
- 22: Ringteil
- 23: Verbindungsstück
- 24: Anfangsbereich
- 25: Endbereich
- 26: Ringabschnittteilhälfte
- 27: neutraler Radius r_{N}

## Patentansprüche

1. Reibbelag, insbesondere für eine Kupplungsscheibe, mit Reibbelagmaterial und mit einem eine geschlossene Kreisringstruktur aufweisenden, in Umfangsrichtung mäanderförmig ausgebildeten Trägerelement mit einer Anzahl sich radial nach innen über die radiale Erstreckung des Reibbelagmaterials hinaus erstreckenden Befestigungsabschnitten zur Anbindung des Reibbelages an eine Kupplungsscheibe oder dergleichen, wobei das Trägerelement zumindest teilweise in das Reibbelagmaterial eingebettet ist,
**dadurch gekennzeichnet,**
**dass** sich von der Kreisringstruktur zumindest über einen Teilbereich elastisch verformbare Fortsätze erstrecken, deren Endabschnitte sich dem Trägerelement oder einem benachbarten Fortsatz insofern annähern, dass sich zwischen diesen und den Endabschnitten ein Spalt bildet.

2. Reibbelag, insbesondere für eine Kupplungsscheibe, mit Reibbelagmaterial und mit einem eine geschlossene Kreisringstruktur aufweisenden, in Umfangsrichtung mäanderförmig ausgebildeten Trägerelement mit einer Anzahl sich radial nach innen über die radiale Erstreckung des Reibbelagmaterials hinaus erstreckenden Befestigungsabschnitten zur Anbindung des Reibbelages an eine Kupplungsscheibe oder dergleichen, wobei das Trägerelement zumindest teilweise in das Reibbelagmaterial eingebettet ist,
**dadurch gekennzeichnet,**
**dass** sich von der Kreisringstruktur zumindest über einen Teilbereich elastisch verformbare Fortsätze mit ihrem Anfangs- und Endbereich heraus erstrecken.

3. Reibbelag, insbesondere für eine Kupplungsscheibe, mit Reibbelagmaterial und mit einem eine geschlossene Kreisringstruktur aufweisenden, in Umfangsrichtung mäanderförmig ausgebildeten Trägerelement mit einer Anzahl sich radial nach innen über die radiale Erstreckung des Reibbelagmaterials hinaus erstreckenden Befestigungsabschnitten zur Anbindung des Reibbelages an eine Kupplungsscheibe oder dergleichen, wobei das Trägerelement zumindest teilweise in das Reibbelagmaterial eingebettet ist,
**dadurch gekennzeichnet,**
**dass** sich von der Kreisringstruktur zumindest über einen Teilbereich elastisch verformbare Fortsätze erstrecken und zumindest ein Fortsatz zumindest einen Endabschnitt aufweist, der mittels einem eine Sollbruchstelle bildenden Übergangsbereich in einen benachbarten Fortsatz oder in die Kreisringstruktur übergeht.

4. Reibbelag nach einem der Ansprüche 1 bis 3 **dadurch gekennzeichnet, dass** das Trägerelement nur teilweise in das Belagmaterial eingebettet ist.

5. Reibbelag nach Anspruch 1 **dadurch gekennzeichnet, dass** der Spalt kleiner oder gleich 0,9mm ist.

6. Reibbelag nach Anspruch 5 **dadurch gekennzeichnet, dass** der Spalt kleiner oder gleich 0,5mm ist.

7. Reibbelag nach Anspruch 1 **dadurch gekennzeichnet, dass** der Spalt kleiner oder gleich der Dicke des Trägerelements ist.

8. Reibbelag nach einem der Ansprüche 1 bis 3 **dadurch gekennzeichnet, dass** bei einer Größenänderung des Reibbelagmaterials die Fortsätze verformt werden können.

9. Reibbelag nach einem der Ansprüche 1 bis 3 **dadurch gekennzeichnet, dass** infolge einer Volumenänderung des Reibbelages im Herstellungsprozess die Fortsätze verformbar sind.

10. Reibbelag nach Ansprüchen 8 und 9 **dadurch gekennzeichnet, dass** sich die Fortsätze elastisch verformen.

11. Reibbelag nach einem der Ansprüche 1 bis 3 **dadurch gekennzeichnet, dass** er eine im Wesentlichen kreisringartige Grundform aufweist.

12. Reibbelag nach einem der Ansprüche 1 bis 3 **dadurch gekennzeichnet, dass** die Kreisringstruktur des Trägerelements vornehmlich im Bereich der neutralen Zone des Reibbelagmaterials eingebettet ist.

13. Reibbelag nach einem der Ansprüche 1 bis 3 **dadurch gekennzeichnet, dass** sich die Befestigungsabschnitte über das Reibbelagmaterial hinaus radial nach innen erstrecken.

14. Reibbelag nach einem der Ansprüche 1 bis 3 **dadurch gekennzeichnet, dass** die Anbindung der Befestigungsabschnitte an eine Kupplungsscheibe radial innerhalb des Reibbelagmaterials erfolgt.

15. Reibbelag nach einem der Ansprüche 1 bis 3 **dadurch gekennzeichnet, dass** ein Befestigungsabschnitt zwei Ringabschnittteile miteinander verbindet.

16. Reibbelag nach einem der Ansprüche 1 bis 3 oder dem Anspruch 15 **dadurch gekennzeichnet, dass** die Kreisringstruktur des Trägerelementes vermittels Befestigungsabschnitte mäanderförmig ausgebildet wird.

17. Reibbelag nach Anspruch 13 **dadurch gekennzeichnet, dass** die Anbindung durch Vernietung erfolgt.

18. Reibbelag nach einem der Ansprüche 1 bis 3 **dadurch gekennzeichnet, dass** das Trägerelement aus Stahl, insbesondere Federstahl, hergestellt wird.

19. Reibbelag nach einem der Ansprüche 1 bis 3 **dadurch gekennzeichnet, dass** das Trägerelement aus Blech, insbesondere Federstahlblech, erstellt wird.

20. Reibbelag nach einem der Ansprüche 1 bis 3 **dadurch gekennzeichnet, dass** das Trägerelement mit einer die Haftung mit dem Reibbelagmaterial erhöhenden Beschichtung versehen ist.

21. Reibbelag nach einem der Ansprüche 1 bis 3 **dadurch gekennzeichnet, dass** das Reibmaterial als durchgängiger Ring ausgebildet ist.

22. Reibbelag nach Anspruch 21 **dadurch gekennzeichnet, dass** in die Oberfläche des Reibmaterials Nuten oder Einschnitte eingebracht sind.

23. Reibbelag nach einem der Ansprüche 1 bis 3 **dadurch gekennzeichnet, dass** sich die Fortsätze von den Ringabschnittsteilen radial nach außen erstrecken.

24. Reibbelag nach einem der Ansprüche 1 bis 3 **dadurch gekennzeichnet, dass** die Befestigungsabschnitte als Ösen für den Durchtritt eines Niets ausgebildet sind.

25. Reibbelag nach einem der Ansprüche 1 bis 3 **dadurch gekennzeichnet, dass** die Ringabschnittsteile, die Fortsätze und die Befestigungsabschnitte einteilig ausgebildet sind.

26. Reibbelag nach einem der Ansprüche 1 bis 3 **dadurch gekennzeichnet, dass** das Ringabschnittsteil, die Fortsätze und die Befestigungsabschnitte aus einem Blech ausgestanzt sind.

27. Reibbelag nach einem der Anspruch 26 **dadurch gekennzeichnet, dass** das Blech eben ausgebildet ist.
